# EUROPÄISCHE PATENTSCHRIFT

(11) **EP 1 264 498 B1**
(45) Veröffentlichungstag und Bekanntmachung des Hinweises auf die Patenterteilung: **28.07.2010**
(21) Anmeldenummer: 01909527.2
(22) Anmeldetag: 23.01.2001
(51) Int. Cl.: H04W 24/00

(54) **SIM-TOOLKIT-APPLICATION-DIENSTGÜTE-ERFASSUNG**
SIM TOOLKIT APPLICATION SERVICE DETECTION
ENREGISTREMENT DE LA QUALITE DE SERVICE A L'AIDE D'UNE APPLICATION DE BOITE A OUTILS POUR MIA

(30) Priorität: 02.02.2000 DE 10004847
(43) Veröffentlichungstag der Anmeldung: 11.12.2002
(73) Patentinhaber: Vodafone Holding GmbH, 40213 Düsseldorf (DE)
(72) Erfinder: DINSING, Torsten, 50670 Köln (DE); KLEIER, Stephan, 40545 Düsseldorf (DE); TIMPHUS, Frank, 40233 Düsseldorf (DE)
(74) Vertreter: Meissner, Peter E.
(86) Internationale Anmeldenummer: PCT/DE2001/000318
(87) Internationale Veröffentlichungsnummer: WO 2001/058192

(56) Entgegenhaltungen:
- EP-A- 0 998 059
- WO-A-00/67507
- WO-A-98/32265
- WO-A-99/28884
- WO-A-99/49690
- DE-A- 19 820 845
- GB-A- 2 262 014

## Beschreibung

Die Erfindung betrifft Verfahren und Vorrichtungen zur Erfassung der Dienstgüte mindestens eines Telekommunikationsdienstes in einem Mobilfunk-Telekommunikationsnetz, in welchem Mobilfunk-Telekommunikationsnetz Mobilfunkteilnehmer seitig Mobilfunkendgeräte (Handys) und Mobilfunkteilnehmer Identifikationskarten (SIM) vorgesehen sind. Aus der DE 198 20 845 der selben Anmelderin ist ein Verfahren zur Bestimmung der Dienstgüte von Telekommunikationsdiensten in einem Kommunikationsnetz bekannt, bei welchem erfasste Dienstgüte-Daten an eine Zentrale im Mobilfunktelekommunikationsnetz zur dortigen Auswertung übermittelt werden. Derartige Endgeräte wurden als Prototypen implementiert. Mit derartigen Mobilfunkendgeräten lässt sich durch Testfahrten relativ einfach und ergonomisch die Netzwerkqualität überwachen. Jedoch können dabei einige die Dienstegüte repräsentierende Parameter (wie "service non accessability") nicht für alle Fehlerfälle erfasst werden. Auch repräsentieren derartige für Tests verwendete Mobilfunkendgeräte näherungsweise aber nicht hinreichend genau die Kunden-seitige Dienstgüte-Situation.

Aufgabe der vorliegenden Erfindung ist eine möglichst einfache, kostengünstige und effiziente Erfassung der Dienstgüte, welche die Kunden-seitige Situation möglichst weitgehend abbildet. Die Aufgabe wird durch die Gegenstände der unabhängigen Ansprüche gelöst.

Durch die Verwendung eines Moduls auf einer Mobilfunkteilnehmeridentifikationskarte können alle herkömmlichen Mobilfunkendgeräte (Handys) mit einer erfindungsgemäßen Mobilfunkteilnehmeridentifikationskarte zur hochgradig realistischen Erfassungen der Kunden-seitigen Dienstgüte verwendet werden, ohne dass dafür eine Anpassung der Endgeräte selbst erforderlich wäre. Dadurch, dass eine große Anzahl von Mobilfunkkunden mit ihren Mobilfunkteilnehmeridentfikationskarten mit einem erfindungsgemäßen Modul (einer SIM-Toolkit-Application) ohne Entstehen zusätzlicher Kosten die Dienstgüte erfassen können, ist das Verfahren zur flächendeckenden laufenden Online-Dienstgüte-Erfassung geeignet.

Dienstgüte-Daten können insbesondere nach einem Gespräch (soweit dies vom Kunden in einem Menü so eingestellt wurde) subjektiv vom Kunden abgefragt werden.

Ferner können objektive Dienst-Gütedaten aufgrund von Kommunikationsparametem automatisch im Endgerät erfasst, akkumuliert und an einen Rechner oder eine Zentrale im Mobilfunknetz per Kurznachricht oder in anderer Weise automatisch übertragen werden. Objektive Dienstgütedaten können insbesondere die Wahrscheinlichkeit eines Netzzugangs beim Einbuchen des Mobilfunkendgeräts in das Mobilfunknetz (network-non-accessability), die Wahrscheinlichkeit nicht zustande gekommener Anrufe oder Dienste (service-non-accessability) und/oder die Wahrscheinlichkeit eines vom Endgerät nicht veranlassten Gesprächsabbruchs (cut-off call ratio) repräsentieren. Um die Zuordnung der Dienstgüte-Daten, zu Problemen oder zu Elementen im Mobilfunknetz einer späteren zentralen Auswertung im Mobilfunknetz zu optimieren, werden vom Mobilfunkendgerät zweckmäßig Positionsdaten (local area code und/oder Zellidentität der mit dem Endgeräten kommunizierenden Mobilfunkzelle) erfasst, abgespeichert und ebenfalls an einen Rechner des Mobilfunknetzes zur dortigen Speicherung bzw. Weiterbearbeitung übertragen.

Das Verfahren ist insbesondere rationell in einer Mobilfunkteilnehmeridentifikationskarte mit einer SIM-Toolkit-Funktion implementierbar.

Das Verfahren ist z. B. in GSM und UMTS einsetzbar und wird auch in MExE und WAP endgerätseitig realisierbar sein.

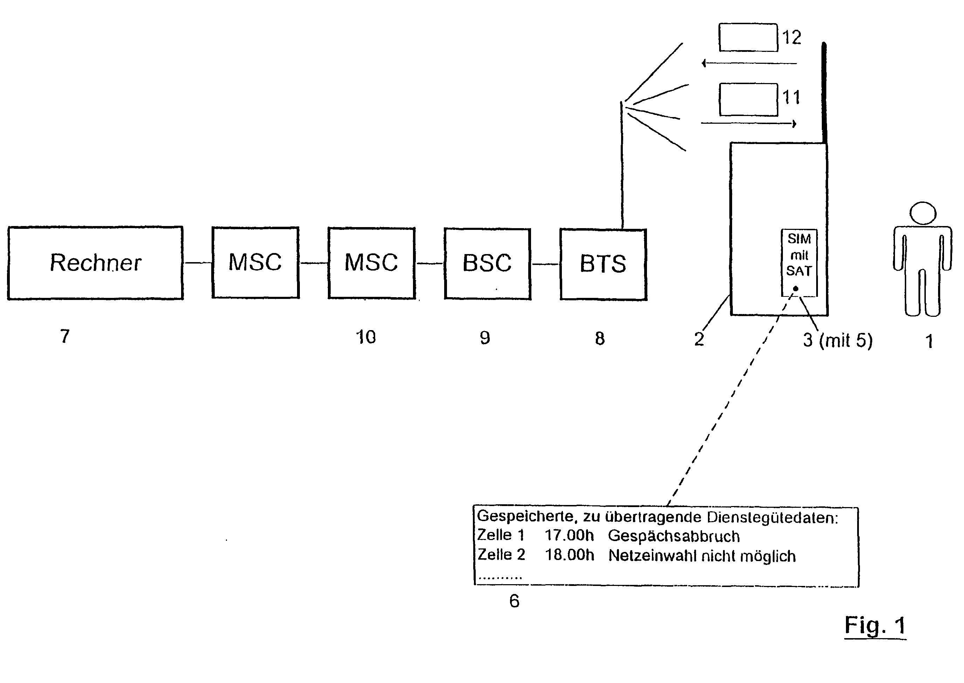

Weitere Merkmale und Vorteile der Erfindung ergeben sich aus der nachfolgenden Beschreibung eines Ausführungsbeispiels anhand der Zeichnung. Dabei zeigt
- Fig. 1: schematisch die Erfassung und Übertragung von Dienstgüte-Daten.

Ein Mobilfunkteilnehmer 1 mit einem Mobilfunkendgerät 2 ist in ein Mobilfunknetz (beispielsweise das deutsche D2-Netz) eingewählt und kann dort Services wie beispielsweise Sprachkommunikation zu einem weiteren Teilnehmer, Übertragung von Kurznachrichten, Empfang von Zell- und Spruch-Kurznachrichten, wie RP-Dienste usw., benutzen.

Die Qualität der vom Mobilfunkteilnehmer 1 in Anspruch genommenen Dienste soll - möglichst einfach, effizient und ohne Anpassung des Endgeräts 2 automatisch erfasst werden. Hierfür ist auf der im Mobilfunkendgerät 2 enthaltenen Mobilfunkteilnehmeridentifikationskarte SIM 3 eine SIM-Toolkit-Application SAT 5 zur automatischen Erfassung von die Dienstgüte repräsentierenden Dienstgüte-Daten vorgesehen. Durch die Erfassung der Dienstgüte in einem Modul der Mobilfunkteilnehmeridentifikationskarte (nämlich im SIM-Toolkit) ist ohne Anpassung von Endgeräten bei einer Vielzahl von Endgeräten eine damit nahezu flächendeckende, kostengünstige und automatische Online-Dienstgüte-Überwachung bezüglich sehr vieler Dienstgüte-Parameter möglich. Das SIM-Toolkit verwendet einen Speicher und einen Prozessor auf der SIM-Karte 3. Im SIM-Toolkit-Speicher werden beispielhaft in der Tabelle 6 dargestellte Dienstgüte-Daten gespeichert, wie beispielsweise Zellidentitäten, Uhrzeiten und Dienstgüte-Parameter. Dienstgüte-Parameter können einerseits subjektive Dienstgüter-Parameter sein, welche beispielsweise während oder nach einem Gespräch automatisch vom Benutzer 1 des Endgeräts 2 (z. B. aufgrund eines Auswahlmenues) abgefragt werden können, soweit der Kunde 1 dies an seinem Mobilfunkendgerät bzw. seiner SIM-Karte 3 voreingestellt hat (ebenfalls mittels eines Auswahlmenues).

Überdies können subjektive Dienstgüte-Daten automatisch vom Endgerät erfasst werden. Auch können diese Dienstgüte-Daten automatisch Zeiten und Positionen des Mobilfunkendgerätes zugeordnet werden, um in einem Rechner 7 des Mobilfunknetzes später eine hochwertige Auswertung so zu ermöglichen.

Im Endgerät erfasste objektive Dienstgüte-Daten können insbesondere die Wahrscheinlichkeit des Netz-Zugangs (bzw. Netz - nicht - Zugangs) des Teilnehmers 1 beim Einbuchen mit seinem Endgerät 2 und der SIM-Karte 3 im Mobilfunknetz 8, 9, 10, also die network-non-accessability umfassen; insbesondere kann es sein, dass alle Mobilfunk-Sprachkanäle einer Mobilfunk-Basisstation BTS 8 bereits von anderen Mobilfunkteilnehmem belegt sind und der Mobilfunkteilnehmer 1 sich deshalb nicht einbuchen kann. Ferner kann ein Kommunikationsparameter der objektiven Dienstgüte-Daten die Gesprächsabbruchswahrscheinlichkeit repräsentierende Daten umfassen. Insbesondere kann dies die Angabe eines konkreten Gesprächsabbruchs (wie im Beispiel gemäß Tabelle 6: in Zelle 1 um 17:00 Uhr) umfassen. Ein Gespräch kann beispielsweise aufgrund einer Funkstörung abbrechen.

Ferner können objektive Dienstgüte-Daten Angaben über nicht zustande gekommene Services umfassen, insbesondere über nicht zustande kommende Anrufe eines Mobilfunkteilnehmers 1 bei einem anderen Mobilfunkteilnehmer, nicht Einbuchbarkeit.in die WAP-Dienste etc.

Im Mobilfunkendgerat erfasste Dienstgüte-Daten (6) werden vom Mobilfunkendgerät beispielsweise per SMS-PtP 12 über das Mobilfunknetz 8,9,10 an einen Rechner 7 zur dortigen Speicherung und/oder Weiterauswertung übermittelt Zur Reaiisierung des Verfahrens kann beispielsweise ein Programm in einem SIM-Application-Toolkit verwendet werden. Der Kern der Erfindung liegt dabei jedoch nicht in dem Programm als solchem.

## Patentansprüche

1. Verfahren zur Erfassung der Dienstgüte mindestens eines Telekommunikationsdienstes in einem Mobilfunktelekommunikationsnetz (7 -10), in welchem Mobilfunktelekommunikationsnetz (7-10) Mobilfunkteilnehmer-seitig (1) Mobilfunkendgeräte (2) und Mobilfunkteilnehmeridentifikationskarten (3) vorgesehen sind,
wobei die Dienstgüte repräsentierende Dienstgüte-Daten (6,12) mit Hilfe eines Moduls (5) auf der Mobilfunkteilnehmeridentifikationskarte (3) erfasst werden
und wobei die Dienstgüte-Daten (6,12) vom Mobilfunkendgerät (2) an das Mobilfunktelekommunikationsnetz (7-10) übertragen werden.

2. Verfahren nach Anspruch 1;
**dadurch gekennzeichnet,**
**dass** das Modul als SIM-Toolkit-Application (5) in einer Mobilfunkteilnehmeridentfikationskarte (3) realisiert ist.

3. Verfahren nach einem der vorhergehenden Ansprüche,
**dadurch gekennzeichnet,**
**dass** Dienstgüte-Daten vom Modul (5) über das Mobilfunkendgerät (2) vom Nutzer (1) des Mobilfunkendgeräts (2) abgefragt werden.

4. Verfahren nach einem der vorhergehenden Ansprüche,
**dadurch gekennzeichnet,**
**dass** objektive Dienstgüte-Daten in der Mobilfunkteilnehmeridentifikationskarte aufgrund von einem oder mehreren die objektiv Dienstgüte repräsentierenden Kommunikationsparametem erfasst und im Mobilfunkendgerät oder der Mobilfunkteilnehmeridentifikafionskarte abgespeichert werden.

5. Verfahren nach einem der vorhergehenden Ansprüche,
**dadurch gekennzeichnet,**
**dass** objektive Dienstgüte-Daten Angaben über das Zustandekommen eines Netz-Zuganges beim Einbuchen eines Mobilfunkendgerätes (2, 3) in ein Mobilfunknetz (8, 9,10) repräsentieren.

6. Verfahren nach einem der vorhergehenden Ansprüche,
**dadurch gekennzeichnet,**
**dass** objektive Dienst-Gütedaten Angaben über das Zustandekommen eines Services für das Endgerät (2, 3) repräsentieren.

7. Verfahren nach einem der vorhergehenden Ansprüche,
**dadurch gekennzeichnet,**
**dass** objektive Dienstgüte-Daten Angaben über mindestens einen vom Endgerätnutzer nicht veranlassten sein Gesprächsabbruch repräsentieren.

8. Verfahren in einem der vorhergehenden Ansprüche,
**dadurch gekennzeichnet,**
**dass** im SIM-Toolkit-Modul vom Mobilfunktelekommunikationsnetz erfasste, die Position des Mobilfunkendgerätes betreffende Positionsdaten und an der Position erfasste Dienstgüte-Daten abgespeichert werden.

9. Verfahren nach einem der vorhergehenden Ansprüche,
**dadurch gekennzeichnet,**
**dass** die Positionsdaten einen local area code und/oder die Zellidentität (11) der mit dem Endgerät kommunizierten Mobilfunkzelle, welche dem Endgerät vom Mobilfunknetz mitgeteilt wurde, repräsentieren.

10. Verfahren nach einem der vorhergehenden Ansprüche,
**dadurch gekennzeichnet,**
**dass** erfasste Dienstgüte-Daten einzeln oder gesammelt in mindestens einer Mobilfunk-Kurznachricht (12) an das Mobilfunknetz (7) übermittelt werden.

11. Verfahren nach einem der vorhergehenden Ansprüchen,
**dadurch gekennzeichnet,**
**dass** im Mobilfunknetz die übermittelten Dienstgüte-Daten von einem Rechner (7) erfasst und gespeichert und/oder weiterverarbeitet werden.

12. Mobilfunkteilnehmeridentfikationskarte, welche Mittel zur Durchführung der einzelnen Schritte des Verfahrens nach einem der vorhergehenden Ansprüche umfasst,
mit einem Modul (5), welches die Dienstgüte repräsentierende Dienstgüte-Daten automatisch erfasst und
welches so ausgebildet ist, dass erfasste Dienstgüte-Daten über ein Mobilfunkendgerät (2) an einen Rechner (7) im Mobilfunknetz (7-10) gesendet werden.

13. Mobilfunkteilnehmeridentifikationskarte nach Anspruch 12,
**dadurch gekennzeichnet,**
**dass** das Modul als SIM-Toolkk-Application (5) in der Mobilfunkteilnehmeridentifikationskarke (3) realisiert ist.

14. Mobitfunkteiinehmendentifikattonskarte nach einem der Ansprüche 12-13,
**dadurch gekennzeichnet,**
**dass** das Modul derart gestaltet ist, dass Dienstgüte-Daten vom Modul (5) über das mobilfunwenagerat (2) vom Nutzer (1) des Mobiltunkendgeräts (2) abgefragt werden.

15. Mobilfunkteilnehmeridentifikationskarte nach einem der Ansprüche 12-14,
**dadurch gekennzeichnet,**
**dass** die Mobilfunkteilnehmeridentifikationskarte derart gestaltet ist, dass objektive Dienstgüte-Daten in ihr aufgrund von einem oder mehreren die objektive Dienstgüte repräsentierenden Kommunikationsparametem erfasst und im Mobilfunkendgerät oder der Mobilfunkteilnehmendentifikationskarte abgespeichert werden.

16. Mobiifunkteitnehmeridonttfikationskarte nach einem der Ansprüche 12-15,
**dadurch gekennzeichnet,**
**dass** objektive Dienstgüte-Daten Angaben über das Zustandekommen eines Neiz-Zuganges beim Einbuchen eines Mobilfunkendgerätes (2, 3) in ein Mobilfunknetz (8, 9, 10) repräsentierten.

17. Mobilfunkteilnehmeridentifikabonskarte nach einem der Ansprüche 12-16,
**dadurch gekennzeichnet,**
**dass** objektive Dienstgüte-Daten Angaben über das Zustandekommen eines Services für das Endgerät (2, 3) repräsentieren.

18. Mobilfunkteilnehmeridentifikaüonskarte nach einem der Ansprüche 12-17,
**dadurch gekennzeichnet,**
**dass** objektive Dienstgüte-Daten Angaben über mindestens einen vom Endgerätnutzer nicht veranlassten Gesprächsabbruch repräsentieren.

19. Mobilfunkteilnehmeridentifikationskarte nach einem der Ansprüche 12-18,
**dadurch gekennzeichnet,**
**dass** das SIM-Toolkit-Modul derart gestaltet ist, dass in ihm vom Mobilfunknetz erfasste, die Position des Mobilfunkendgerätes betreffende Positionsdaten und an der Position erfasste Dienstgüte-Daten abgespeichert werden.

20. Mobilfunkteilnehmeridentifikationskarte nach einem der Ansprüche 12-19,
**dadurch gekennzeichnet,**
**dass** die Positionsdaten einen local area code und/oder die Zellidentität der mit dem Endgerät kommunizierten Mobilfunkzelle, welche dem Endgerät vom Mobilfunknetz mitgeteilt wurde, repräsentieren.

## Claims

1. Method for detecting the service quality of at least one telecommunications service in a mobile telecommunications network (7 - 10), in which mobile telecommunications network (7-10) mobile-communications terminal devices (2) and mobile-communications subscriber identification cards (3) are provided on the mobile-communications subscriber side (1),
service-quality data (6, 12) which represent the service quality being detected with the aid of a module (5) on the mobile-communications subscriber identification card (3), and the service-quality data (6, 12) being transmitted from the mobile-communications terminal device (2) to the mobile telecommunications network (7 - 10).

2. A method according to Claim 1, **characterised in that** the module is realised as a SIM toolkit application (5) in a mobile-communications subscriber identification card (3).

3. A method according to one of the preceding claims, **characterised in that** service-quality data are interrogated by the module (5) via the mobile-communications terminal device (2) by the user (1) of the mobile-communications terminal device (2).

4. A method according to one of the preceding claims, **characterised in that** objective service-quality data are detected in the mobile-communications subscriber identification card on the basis of one or more communication parameters which represent the objective service quality and are stored in the mobile-communications terminal device or the mobile-communications subscriber identification card.

5. A method according to one of the preceding claims, **characterised in that** objective service-quality data represent details of the bringing about of network access upon connecting a mobile-communications terminal device (2, 3) to a mobile communications network (8, 9, 10).

6. A method according to one of the preceding claims, **characterised in that** objective service-quality data represent details of the realisation of a service for the terminal device (2, 3).

7. A method according to one of the preceding claims, **characterised in that** objective service-quality data represent details of at least one [his] call cut-off not caused by the terminal-device user.

8. A method in [sic] one of the preceding claims, **characterised in that** positional data relating to the position of the mobile-communications terminal device and service-quality data detected at the position, which are detected by the mobile telecommunications network, are stored in the SIM toolkit module.

9. A method according to one of the preceding claims, **characterised in that** the positional data represent a local area code and/or the cell identity (11) of the mobile communications cell which communicates with the terminal device, of which cell the terminal device has been informed by the mobile communications network.

10. A method according to one of the preceding claims, **characterised in that** detected service-quality data are transmitted to the mobile communications network (7) individually or in a collection in at least one mobile-communications short message (12).

11. A method according to one of the preceding claims, **characterised in that** the transmitted service-quality data are detected and stored and/or processed further by a computer (7) in the mobile communications network.

12. A mobile-communications subscriber identification card, which comprises means for carrying out the individual steps of the method according to one of the preceding claims,
with a module (5) which automatically detects service-quality data representing the service quality and
which is designed such that detected service-quality data are transmitted via a mobile-communications terminal device (2) to a computer (7) in the mobile communications network (7- 10).

13. A mobile-communications subscriber identification card according to Claim 12, **characterised in that** the module is realised as a SIM toolkit application (5) in the mobile-communications subscriber identification card (3).

14. A mobile-communications subscriber identification card according to one of Claims 12-13, **characterised in that** the module is designed such that service-quality data are interrogated by the module (5) via the mobile-communications terminal device (2) by the user (1) of the mobile-communications terminal device (2).

15. A mobile-communications subscriber identification card according to one of Claims 12 - 14, **characterised in that** the mobile-communications subscriber identification card is designed such that objective service-quality data are detected therein on the basis of one or more communication parameters which represent the objective service quality and are stored in the mobile-communications terminal device or the mobile-communications subscriber identification card.

16. A mobile-communications subscriber identification card according to one of Claims 12 - 15, **characterised in that** objective service-quality data represent details of the bringing about of network access upon connecting a mobile-communications terminal device (2, 3) to a mobile communications network (8, 9, 10).

17. A mobile-communications subscriber identification card according to one of Claims 12 - 16, **characterised in that** objective service-quality data represent details of the realisation of a service for the terminal device (2, 3).

18. A mobile-communications subscriber identification card according to one of Claims 12 - 17, **characterised in that** objective service-quality data represent details of at least one call cut-off not caused by the terminal-device user.

19. A mobile-communications subscriber identification card according to one of Claims 12 - 18, **characterised in that** the SIM toolkit module is designed such that positional data relating to the position of the mobile-communications terminal device and service-quality data detected at the position, which are detected by the mobile communications network, are stored therein.

20. A mobile-communications subscriber identification card according to one of Claims 12 - 19, **characterised in that** the positional data represent a local area code and/or the cell identity of the mobile communications cell which communicates with the terminal device, of which cell the terminal device has been informed by the mobile communications network.

## Revendications

1. Procédé de saisie de la qualité de service d'au moins un service de télécommunications dans un réseau de télécommunications de téléphonie mobile (7 à 10), dans lequel réseau de télécommunications de téléphonie mobile (7 à 10) il est prévu, côté abonné de téléphonie mobile (1), des terminaux de téléphonie mobile (2) et des cartes d'identification d'abonnés de téléphonie mobile (3), procédé dans lequel des données de qualité de service (6, 12) représentant la qualité du service sont saisies à l'aide d'un module (5) sur la carte d'identification d'abonné de téléphonie mobile (3)
et dans lequel les données de qualité de service (6, 12) sont transmises du terminal de téléphonie mobile (2) au réseau de télécommunications de téléphonie mobile (7 à 10).

2. Procédé selon la revendication 1,
**caractérisé en ce que**
le module est réalisé sous la forme d'une application de boîte à outils pour module d'identité abonné (MIA) (5) dans une carte d'identification d'abonné de téléphonie mobile (3).

3. Procédé selon l'une quelconque des revendications précédentes,
**caractérisé en ce que**
des données de qualité de service sont interrogées par le module (5) par le biais du terminal de téléphonie mobile (2) de l'utilisateur (1) du terminal de téléphonie mobile (2).

4. Procédé selon l'une quelconque des revendications précédentes,
**caractérisé en ce que**
des données de qualité de service objective sont saisies dans la carte d'identification d'abonné de téléphonie mobile en raison d'un ou plusieurs paramètres de communication représentant objectivement la qualité du service et sont mémorisées dans le terminal de téléphonie mobile ou dans la carte d'identification d'abonné de téléphonie mobile.

5. Procédé selon l'une quelconque des revendications précédentes,
**caractérisé en ce que**
des données de qualité de service objective représentent des indications sur la réalisation d'un accès au réseau lors de l'enregistrement d'un terminal de téléphonie mobile (2, 3) dans un réseau de téléphonie mobile (8, 9, 10).

6. Procédé selon l'une quelconque des revendications précédentes, **caractérisé en ce que**
des données de qualité de service objective représentent des indications sur la réalisation d'un service pour le terminal (2, 3).

7. Procédé selon l'une quelconque des revendications précédentes, **caractérisé en ce que**
des données de qualité de service objective représentent des indications sur au moins une interruption de conversation non provoquée par l'utilisateur du terminal.

8. Procédé selon l'une quelconque des revendications précédentes, **caractérisé en ce que**
des données de position saisies dans le module de boîte à outils pour MIA par le réseau de télécommunications de téléphonie mobile et concernant la position du terminal de téléphonie mobile et des données de qualité du service saisies dans la position sont mémorisées.

9. Procédé selon l'une quelconque des revendications précédentes, **caractérisé en ce que**
les données de position représentent un code local et/ou l'identité cellulaire (11) de la cellule de téléphonie mobile en communication avec le terminal, qui a été communiqué(e) au terminal par le réseau de téléphonie mobile.

10. Procédé selon l'une quelconque des revendications précédentes, **caractérisé en ce que**
les données de qualité de service saisies sont transmises seules ou conjointement dans au moins un message court de téléphonie mobile (12) sur le réseau de téléphonie mobile (7).

11. Procédé selon l'une quelconque des revendications précédentes, **caractérisé en ce que**,
dans le réseau de téléphonie mobile, les données de qualité de service transmises sont saisies, enregistrées et/ou retraitées par un ordinateur (7).

12. Carte d'identification d'abonné de téléphonie mobile, qui comprend des moyens pour réaliser les étapes individuelles du procédé selon l'une quelconque des revendications précédentes,
comprenant un module (5) qui saisit automatiquement des données de qualité de service représentant la qualité de service et
qui est formé de sorte que les données de qualité de service saisies soient envoyées via un terminal de téléphonie mobile (2) à un ordinateur (7) dans le réseau de téléphonie mobile (7 à 10).

13. Carte d'identification d'abonné de téléphonie mobile selon la revendication 12,
**caractérisée en ce que**
le module est réalisé sous la forme d'une application de boîte à outils pour MIA (5) dans la carte d'identification d'abonné de téléphonie mobile (3).

14. Carte d'identification d'abonné de téléphonie mobile selon l'une quelconque des revendications 12 à 13,
**caractérisée en ce que**
le module est conçu de sorte que des données de qualité de service du module (5) soient interrogées via le terminal de téléphonie mobile (2) par l'utilisateur (1) du terminal de téléphonie mobile (2).

15. Carte d'identification d'abonné de téléphonie mobile selon l'une quelconque des revendications 12 à 14,
**caractérisée en ce que**
la carte d'identification d'abonné de téléphonie mobile est conçue de sorte que des données de qualité de service objective soient saisies dans celle-ci en raison d'un ou plusieurs paramètres de communication représentant la qualité de service objective et mémorisées dans le terminal de téléphonie mobile ou dans la carte d'identification d'abonné de téléphonie mobile.

16. Carte d'identification d'abonné de téléphonie mobile selon l'une quelconque des revendications 12 à 15,
**caractérisée en ce que**
des données de qualité de service objective représentent des indications sur la réalisation d'un accès au réseau lors de l'enregistrement d'un terminal de téléphonie mobile (2, 3) dans un réseau de téléphonie mobile (8, 9, 10).

17. Carte d'identification d'abonné de téléphonie mobile selon l'une quelconque des revendications 12 à 16,
**caractérisée en ce que**
des données de qualité de service objective représentent des indications sur la réalisation d'un service pour le terminal (2, 3).

18. Carte d'identification d'abonné de téléphonie mobile selon l'une quelconque des revendications 12 à 17,
**caractérisée en ce que**
des données de qualité de service objective représentent des indications sur au moins une interruption de conversation non provoquée par l'utilisateur du terminal.

19. Carte d'identification d'abonné de téléphonie mobile selon l'une quelconque des revendications 12 à 18,
**caractérisée en ce que**
le module de boîte à outils pour MIA est conçu de manière à mémoriser des données de position saisies dans celui-ci par le réseau de téléphonie mobile et concernant la position du terminal de téléphonie mobile et des données de qualité de service saisies dans la position.

20. Carte d'identification d'abonné de téléphonie mobile selon l'une quelconque des revendications 12 à 19,
**caractérisée en ce que**
les données de position représentent un code local et/ou l'identité cellulaire de la cellule de téléphonie mobile en communication avec le terminal, qui a été communiqué(e) au terminal par le réseau de téléphonie mobile.
